# EUROPEAN PATENT SPECIFICATION

(11) **EP 1 651 331 B1**
(45) Date of publication and mention of the grant of the patent: **30.05.2007**
(21) Application number: 03817744.0
(22) Date of filing: 05.08.2003
(51) Int. Cl.: B01D 61/48, C02F 1/469, B01J 47/08

(54) **ELECTRODEIONIZATION MODULE AND APPARATUS COMPRISING IT**
MODUL ZUR ELEKTRISCHEN ENTIONISIERUNG UND DIESES UMFASSENDE VORRICHTUNG
MODULE D'ELECTRODESIONISATION ET APPAREIL LE COMPORTANT

(43) Date of publication of application: 03.05.2006
(73) Proprietor: MILLIPORE CORPORATION, Billerica, Massachusetts 01821-3405 (US); EBARA CORPORATION, Ohta-ku, Tokyo 144-8510 (JP)
(72) Inventor: MOULIN, Jacques, F-78370 Plaisir (FR); FUJIWARA, Kunio, Yokohama (JP)
(74) Representative: Gambell, Derek
(86) International application number: PCT/IB2003/004112
(87) International publication number: WO 2005/011849

(56) References cited:
- EP-A- 0 422 453
- EP-A- 1 069 079
- EP-A- 1 233 004
- US-A- 5 026 465

## Description

The present invention relates to an electrodeionization (EDI) module and apparatus adapted to transfer ions present in a liquid under the influence of a polar field. Specifically, this invention relates to an EDI apparatus adapted to purify aqueous liquids for the production of high purity water or ultra-pure water.

The purification of an aqueous liquid by reducing the concentration of ions and molecules in the liquid has been an area of substantial technological interest. Numerous techniques have been used to purify aqueous liquids, and the most well known processes include distillation, electrodialysis, reverse osmosis, liquid chromatography, membrane filtration and ion-exchange, as well as the technique known as EDI.

The first known apparatus and method for treating liquids by EDI was described by Watler et al (*c.f.* W. R. Walters, D. W. Weister and L. J. Marek, Industrial and Engineering Chemistry, Vol. 47, No. 1, pp61-67,1955) in 1955. United States Patents Nos. 2,689,826 and 2,815,320 in the name of Kollsman were the first known patents describing an apparatus and process for removing ions from a liquid in a depleting chamber also known as a dilution, desalting or demineralization chamber, through a series of anionic and cationic membranes into an adjacent volume of liquid in a concentrating chamber under the influence of an electrical potential which causes the desired ions to migrate in a predetermined direction. The volume of the liquid being treated is depleted of ions while the volume of the adjacent liquid becomes enriched with transferred ions. The second of these patents describes the use of macroporous beads formed of ion-exchange resins as a filler material positioned between the anionic and cationic membranes.

These ion-exchange resins form a path for ion transfer and also serve as an increased conductivity bridge between the membranes for the movement of the ions.

Generally, ion-exchange resins employed in EDI modules are in the form of polymer beads (polystyrene, etc.), that are commercially available from Dow Chemical Company, Sybron Chemicals, Purolite and Rohm-Haas, for example, are typically 0.4 to 0.6 mm in diameter and contain functional groups which allow these beads to have an anion or cation-exchange function depending on the functional groups attached. The functional groups generally used for cation-exchange resins are sulfonic acid groups, while for anion-exchange resins these groups are typically quaternary ammonium groups. These beads are packed in the desalting and the concentrate compartments of an EDI apparatus either in a separate bed or a mixed bed configuration. A separate bed arrangement comprises the physical packing of anion and cation ion-exchange beads alternating throughout the desalting and concentrate compartments, the desalting and concentrate compartments being separated from the adjacent compartments by an anion-exchange membrane and a cation-exchange membrane. A mixed bed arrangement comprises the physical packing of an appropriate and uniform mixture of anion and cation-exchange beads throughout the desalting and concentrate compartments, the desalting and concentrate compartments being separated from the adjacent compartments by an anionic membrane and a cationic membrane.

Commercially successful EDI apparatuses and processes are described in particular in United States Patents Nos. 4,465,573; 4,632,745; 4,636,296; 4,687,561; 4,702,810; 5,026,465; 5,376,253; 5,954,935 and 5,503,729 and in International Patent Application No. WO-96/29133. Some of these apparatuses employed in particular desalting compartments containing an ion exchange composition and concentrating compartments which were free of ion-exchange solid material. The EDI apparatuses employed two terminal electrode chambers containing an anode and a cathode and were used to pass direct current transversely through the body of the apparatuses containing a plurality of desalting compartments and concentrating compartments. In the case of US Patent No. 5,376,253, the arrangement of the apparatus is of cylindrical form that contains the concentrate and desalting compartments within. In the case of US Patent No 5,954,935, the electrode compartments are formed by desalting compartments, the cathode compartment being filled with anion exchanger material forming an anion resin bed and the anode compartment being filled with a cation exchanger material forming a cation resin bed. The concentrate compartments of the apparatuses disclosed in this document can optionally be filled with such ion exchange resins or with a net-like spacer. In operation of such apparatuses, the dissolved ionized salts of the liquid are transferred through the appropriate membrane from the desalting compartments to the concentrating compartments and these ions were directed to waste. However, the major limitation with these apparatuses are the formation of insoluble scale, in particular within the cathode electrode compartment, and with time they fail to operate correctly.

In any membrane separation process where ions become concentrated, there is always the potential to exceed the solubility limits and form precipitates on membrane surfaces known commonly as scale. In particular, calcium carbonate (CaCO₃) scale is formed when the levels of calcium and carbonate ions reach the solubility limit. The main source for the observed scale phenomena is the adsorption of carbon dioxide (CO₂) in water that will react with hydroxide ions in the following way to form the calcium carbonate ion:

-(1) CO₂ + 2OH⁻ → CO₃²⁻ + H₂O

-(2) CO₃²⁻ + H⁺ → HCO₃- + H₂O

The presence of calcium ions in a concentrate compartment will naturally have as a consequence that calcium carbonate will precipitate out of solution. It should be noted in this connection that calcium carbonate is only slightly soluble in water, since only 14 milligrams is the maximum amount that will dissolve in 1 liter of water. Therefore, the potential for forming scale increases with an increase in calcium ion concentration, pH, carbonate and bicarbonate ion concentrations in a concentrating compartment of an EDI apparatus.

Reactions at the EDI electrodes and water splitting in the EDI process creates shifts in the pH of a concentrate compartment, and is the source of protons (H⁺) and hydroxyl ions (OH⁻) that will contribute effectively to the formation of scale, in particular from the hydroxyl ions. The reactions occurring at the electrodes are shown below, whereby the anode reaction is (3) and the cathode reaction is (4):

2H₂O → 4H⁺ + O₂ + 4e -(3)

2H₂O + 2e⁻ → 2OH⁻ + H₂ -(4)

Water splitting occurring in the desalting compartments is an additional source of hydroxyl ions within the EDI module. In a concentrating compartment where the hydroxyl ions are entering through the anion-exchange membrane and especially along the surface of that anion-exchange membrane, the pH can become sufficiently high enough to generate the formation of scale. Consequently, the formation of scale within the EDI module will result in a very high electrical resistance and blocking of the flow channels leading to a rapid decline in the production of quality water.

There are methods available for the pretreatment of the feed water prior to it entering the EDI apparatus, such as water softening and reverse osmosis, which will reduce the ion concentrations of Ca²⁺, HCO₃⁻ and CO₃²⁻ and therefore reduce the incidence of scale formation. However, improper maintenance of these apparatuses has resulted in limited success in reducing the scale formation inside EDI apparatuses.

Additional commercially successful EDI apparatuses were described in United States Patents Nos. 5,154,809; 5,308,466; 5,316,637 and 5,593,563. These apparatuses all utilize a plurality of desalting compartments containing an ion-exchange composition in the form of resin beads, and a plurality of concentrate compartments which also contain an ion-exchange composition in the form of resin beads. However, in the latter compartments the selectivity for anions and cations was lower. United States Patent No. 5,593,563 addressed the problem of the formation of scale in the cathode electrode compartment by including electrically conductive particles or beads in the cathode electrode compartment. These electrically conductive particles or beads are metallic or constituted by carbon. However, some of these apparatuses experienced internal movement of the ion-exchange compositions in both the desalting and concentrate compartments which resulted in internal blockages, due to the high operational feed pressures or flow rates, which made some apparatuses fail to operate over a period of time.

Alternative ion-exchange compositions have been produced in the form of fabrics made of polymer fibers that contain anion-exchange and cation-exchange functional groups similar to those mentioned above and adapted to be used as ion-exchangers, namely quaternary ammonium groups and sulfonic acide groups, respectively. The basic material of these polymer fibers can be constituted by cellulose based material as well as more robust polymer materials such as polyolefins (c.f.:"S. Ezzahar, A. T. Cherif, J. Sandeaux, R. Sandeaux and C. Gavach, Desalination, Vol. 104, pp 227 - 233, 1996; E. Dejean, E. Laktionov, J. Sandeaux, R. Sandeaux, G. Pourcelly and C. Gavach, Desalination, Vol. 114, pp 165 - 173, 1997; . E. Dejean, J. Sandeaux, R. Sandeaux and C. Gavach, Separation Science and Technology, Vol. 33, No. 6, pp 801 - 818, 1998.; E. Laktionov, E. Dejean, J. Sandeaux, R. Sandeaux, C. Gavach and G. Pourcelly, Separation Science and Technology, Vol. 34, No. 1, pp 69- 84, 1999"). The desired functional groups are grafted onto these fibers in order to create the ion-exchange behavior required for the purification of aqueous liquids. United States Patents Nos. 3,723,306; 5,152,896 and 5,885,453 and French Patent Applications Nos. 1487391; 1492522 and 1522387 give examples of grafting functional groups onto various materials, whereby ion-exchange fibers have been developed.

An alternative technology to grafting the desired ion-exchange functional groups onto the surface of polyolefin type fibers, is the manufacture of heterogeneous ion-exchange materials similar to that described in US Patents Nos. 5,346,924 and 5,531,899. The heterogeneous ion-exchange fibers can be manufactured by mixing an appropriate amount of polyolefin binder with an apparopriate amount of anion and/or cation ion exchange material, mechanically crushing and mixing the components and thermally extruding or moulding the heterogeneous ion-exchange textile polymer fibers.

Commercially successful EDI apparatuses employing ion-exchange polymer fibers have been commercialized by Ebara Corporation and are described in particular in United States Patents Nos. 5,308,467; 5,425,866; 5,738,775 and European Patent Application No. 1069079. The ion-exchange polymer fibers employed in these EDI apparatuses are in the form of anion-exchange woven or non-woven fabrics, cation-exchange woven or non-woven fabrics, anion conducting spacers and cation conducting spacers, these spacers or separation fibers being respectively provided with anion and cation-exchange groups and are located in particular between the aforementioned woven or non-woven fabrics. These EDI apparatuses utilize a plurality of desalting compartments containing the anion and cation-exchange woven or non-woven fabrics and the conducting spacers and a plurality of concentrate compartments which contain anion and cation conducting spacers only. The desalting and concentrate compartments are alternating and separated by anion-exchange and cation-exchange membranes. These apparatuses also employed two terminal electrode compartments containing an anode and a cathode. However, the major limitation with these EDI apparatuses is their susceptibility to the formation of scale with water containing high levels of dissolved CO₂ and their low power efficiency.

The present invention is based on the surprising discovery that the implementation in the desalting and concentrating compartments of either resin beads having ion-exchange functional groups or non-woven or woven fabrics made of ion-exchange fibers, with the resin beads and the fabrics being present together within the electrodeionization module makes it possible to achieve a substantially more effective implementation than those known in the state of the art, in particular with respect to the purity of the water and the maintenance of this purity over time.

The present invention thus relates to an electrodeionization (EDI) module comprising at least one ion-exchange membrane delimiting at least one desalting zone and at least one concentrating zone situated between electrodes, each zone being provided with ion-exchange means, characterized in that the ion-exchange means present in a zone are comprised of either ion-exchange resin beads or at least one non-woven or woven fabric made of ion-exchange fibers, the resin beads and the fabric(s) being both present in the EDI module.

Each zone is preferably formed by a compartment and, in this case, the module contains either at least one desalting compartment separated from two adjacent concentrating compartments respectively by an anion selective ion-exchange membrane and a cation selective ion-exchange membrane or at least one concentrating compartment separated from two adjacent desalting compartments respectively by an anion selective ion-exchange membrane and a cation selective ion-exchange membrane.

According to a preferred embodiment of the present invention, the EDI module comprises alternating desalting compartments and concentrating compartments between electrodes, wherein each desalting compartment is adjacent to two concentrating compartments and separated therefrom respectively by an anion selective ion-exchange membrane and a cation selective ion-exchange membrane, each compartment being provided with ion-exchange means, and is characterized in that the ion-exchange means present in the desalting compartments are comprised of ion-exchange resin beads while the ion-exchange means present in the concentrating compartments are comprised of at least one non-woven or woven fabric made of ion-exchange fibers.

According to an alternative embodiment, the EDI module comprises alternating desalting compartments and concentrating compartments between electrodes, wherein each desalting compartment is adjacent to two concentrating compartments and separated therefrom respectively by an anion selective ion-exchange membrane and a cation selective ion-exchange membrane, each compartment being provided with ion-exchange means, characterized in that the ion-exchange means present in the concentrating compartments are comprised of ion-exchange resin beads while the ion-exchange means present in the desalting compartments are comprised of at least one non-woven or woven fabric made of ion-exchange fibers.

Furthermore, the arrangement according to the preferred embodiment of the invention lends itself advantageously to a development according to which the ion-exchange means comprised of at least one woven or non-woven fabric made of ion-exchange fibers form at least one assembly comprising a woven or non-woven fabric made of anion-exchange fibers and a woven or non-woven fabric made of cation-exchange fibers which are placed in a face to face relationship, and at least one ion conducting spacer which is able to perform ion-exchanges and is interposed between the anion and cation-exchange fabrics.

Preferably, in this case, the or each assembly is arranged such that the woven or non-woven fabric which is at the anion selective ion-echange membrane end is a woven or non-woven fabric made of anion-exchange fibers and the woven or non-woven fabric which is at the cation selective ion-exchange membrane end is a woven or non-woven fabric made of cation-exchange fibers.

Preferably too, an anion conducting spacer and a cation conducting spacer which are able to perform ion-exchanges are positioned between the anion and cation-exchange fabrics and are respectively situated next to the anion-exchange fabric and the cation-exchange fabric.

A particularly effective implementation can thus be obtained, as will be seen in more detail below.

For reasons of efficacy, economy and/or ease of manufacture, it is also preferred that:
- each spacer is in the form of a net-like spacer, preferably a diagonal net-like spacer; and/or
- the fabrics and the spacer(s) are in intimate contact with each other and are, preferably, carried by a frame; and/or
- the or each woven or non-woven fabric made of ion-exchange fibers comprises a substrate made of fibers into which ion-exchange functional groups have been introduced by grafting with monomers which have ion-exchange groups or grafting with monomers having a group which may be converted to ion-exchange group and then converting said group to the ion-exchange group, and the or each spacer, when present, comprises a substrate made of fibers or resins into which ion-exchange functional groups have been introduced by grafting with monomers which have ion-exchange groups or grafting with monomers having a group which may be converted to ion-exchange group and then converting said group to the ion-exchange group; and/or
- the substrate is a cellulosic or polyolefinic material; and/or
- the cation-exchange fibers and/or cation-conducting spacer(s) have sulfonic acid groups and the anion exchange fibers and/or anion-conducting spacer(s) have quaternary ammonium groups; and/or
- the functional groups are introduced by grafting polymerization initiated by radiation (UV-rays, X-rays, γ-rays, accelerated electrons, β-rays or α-rays), or by a chemical reagent, such as cerium ions; and/or
- the or each woven or non-woven fabric made of ion-exchange fibers comprises a substrate made of heterogeneous fibers comprised of a mixture of ion-exchange material and polyolefinic binder and the or each spacer, when present, comprises a substrate made of resins or heterogeneous fibers comprised of a mixture of ion-exchange material and polyolefinic binder.

Regarding the ion-exchange resin beads, they can be formed by anion-exchangers and cation-exchangers forming a mixed bed or separate beds, but preferably a mixed bed. In this case, the ion-exchange resin beads are preferably formed from polymers, such as polystyrene or styrene-divinyl benzene copolymers, having functional groups, preferably sulfonic acid groups for the cation-exchangers and quaternary ammonium groups for the anion-exchangers.

The arrangement according to the invention also lends itself to another development, which may advantageously be combined with the preceding one, according to which an electrode compartment is formed between each electrode and the ion-exchange membrane adjacent to the electrode. In this case the cathode compartment preferably contains electrically conductive particles, which are preferably carbon and/or metallic particles.

This development enables the risk of scale formation to be minimized.

According to an alternative development, the cathode compartment comprises at least one spacer in the form of a net-like spacer maintaining the flow between the cathode and the adjacent cation selective membrane.

Preferably, in this case, the or each spacer in the cathode compartment has ion-exchange groups.

The anode compartment also preferably comprises, in such a case, at least one spacer in the form of a net-like spacer maintaining the flow between the anode and the adjacent anion selective membrane, and which, advantageously, possesses ion-exchange groups.

The electrode compartment may, moreover, be formed by the concentrating or desalting compartment adjacent to each electrode.

The EDI module also preferably comprises a plurality of alternating desalting compartments and concentrating compartments and fluid communication to each of the desalting compartments and to each of the concentrating compartments are each provided in a serial or parallel arrangement.

The present invention also relates to an EDI apparatus for water production of high purity or for production of ultra-pure water, comprising an EDI module as defined above.

The features and advantages of the present invention will emerge furthermore from the following description, made by way of example with reference to the accompanying drawings, in which:
- Figure 1 is a diagrammatic view of an electrodeionization module according to a preferred embodiment of the invention; and
- Figure 2 is a graph of the performance of the electrodeionization module of Figure 1 and of known electrodeionization modules, at the 36^{th} day of operation.

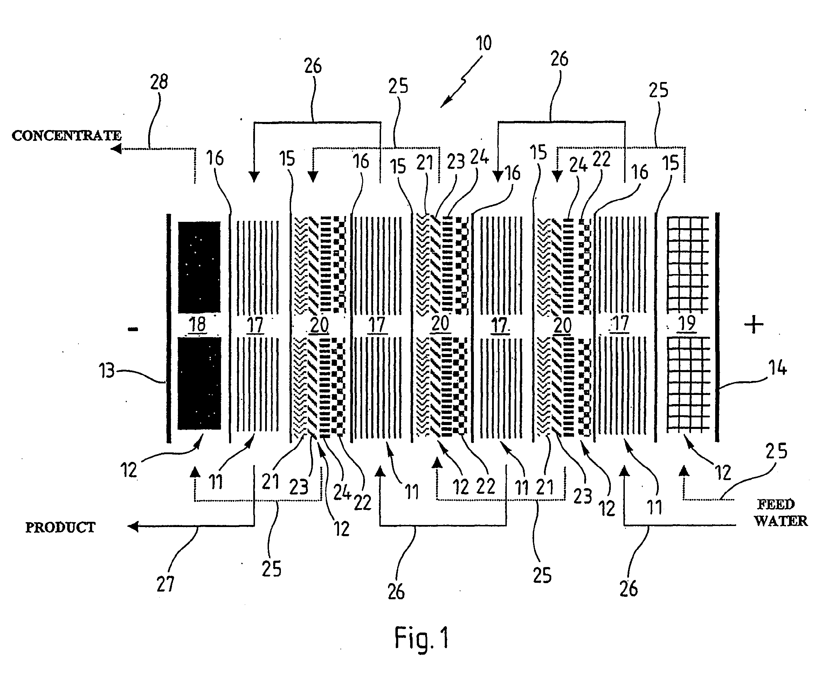

In the embodiment shown in Figure 1, the electrodeionization module 10 according to the invention comprises, in a manner known per se, alternating desalting compartments 11 and concentrating compartments 12 arranged between two terminal electrodes, i.e. a cathode 13 and an anode 14.

Each desalting compartment 11 is separated from two adjacent concentrating compartments 12, respectively by an anion selective ion-exchange membrane 15 and a cation selective ion-exchange membrane 16.

In the embodiment shown, the selective membranes adjacent to the cathode 13 and the anode 14 are respectively constituted by a cation selective membrane 16 and an anion selective membrane 15. The compartments situated between these latter membranes and the respective electrodes 13, 14 are concentrating compartments 12 each forming an electrode compartment containing respectively the cathode 13 and the anode 14.

According to the invention, these compartments 11 and 12 are filled in the following manner:
1) each desalting compartment 11 is filled with cation-exchange resin beads and anion-exchange resin beads forming a mixed bed. These ion-exchange resin beads 17 are formed from polymers having functional groups, which are sulfonic acid groups for the cation-exchangers and quaternary ammonium groups for the anion-exchangers.
2) the concentrating compartment 12 forming a housing compartment for the cathode 13 is filled with electrically conductive beads 18, while the concentrating compartment 12 forming a housing compartment for the anode 14 comprises a spacer in the form of a net 19 maintaining the flow between the anode and the adjacent anion selective membrane 15. In practice, this spacer 19 is formed from a polyolefinic resin net on which have been grafted anion-exchange groups. More particularly, a polyethylene resin net is used on which quaternary ammonium groups have been grafted.
   Such a spacer is similar to those described in the European patent application EP 1 069 079 mentioned above.
3) Each of the remaining concentrating compartments 12 is filled with a sandwich structure 20 each comprising a sheet like non-woven fabric 21 made of anion-exchange fibers, a sheet like non-woven fabric 22 made of cation-exchange fibers, an anion conducting spacer 23 and a cation conducting spacer 24.

The non-woven fabrics 21 and 22 are disposed in face to face relationship and the spacers 23 and 24 are interposed between these two fabrics and are situated on the side of the anion-exchange non-woven fabric 21 in the case of the anion conducting spacer 23 and on the side of the cation-exchange non-woven fabric 22 in the case of the cation conducting spacer 24.

The spacers 23 and 24 are more particularly in the form of a diagonal net formed of polyolefins of high molecular weight on which the ion-exchange functional groups have been grafted, i.e. anion-exchange groups on the anion conducting spacer 23 and cation-exchange groups on the cation conducting spacer 24.

The non-woven fabrics 21 and 22 have also been developed from polyolefinic fibers of high molecular weight, on which the functional groups have been grafted. These polyolefinic fibers are, here, fibers of polyethylene and polypropylene, the functional groups grafted on the fibers being sulfonic acid groups in the case of the cation-exchange fibers and quaternary ammonium groups in the case of the anion-exchange fibers.

These grafted fibers have been obtained through grafting polymerization initiated with radiation, here γ-rays.

It should also be noted that the non-woven fabrics 21 and 22 and the ion conducting spacers 23 and 24 are placed in intimate contact with each other.

Furthermore, the anion-exchange fabric 21 is arranged on the side of the anion selective membrane 15, while the cation-exchange fabric 22 is arranged on the side of the opposite cation selective membrane 16.

It should also be noted that each sandwich structure 20 is carried by a frame (not shown on Figure 1) forming the corresponding compartments 12 and provided, for this purpose, with inlet and outlet passages communicating with the ion-exchange sandwich structure 20, and more particularly with the spacers 23 and 24.

For more detail in relation to this, reference may also be made to the European patent application EP-1-069 079 mentioned above.

In the embodiment shown, fluid communication is provided respectively between the desalting compartments 11 and concentrating compartments 12 according to a serial arrangement (arrows 25 in dotted lines for feeding the concentrating compartments 12 and arrows 26 in solid lines for feeding the desalting compartments 11).

Thus the product coming out from the last desalting compartment 11 (arrow 27 in solid line) is demineralized water, while the product coming out from the last concentrating compartment 12 (arrow 28 in dotted line) is composed of water in which are concentrated the ions extracted from the water that has passed through the desalting compartments 11.

Considering this in more detail, the ions to be eliminated are fixed on the mixed resin beads placed in the desalting compartments 11, out of which comes the demineralized water; by virtue of the application of an electric potential, the ions then migrate rapidly towards the concentrating compartments 12, where they are concentrated for elimination by the electrodeionization module 10.

More details about, on the one hand, the preparation of the ion-exchange non-woven fabrics and ion conducting spacers and, on the other hand, the fabrication of the EDI module are given below.

### Preparation of ion-exchange non-woven fabrics

Table 1 shows the specifications of the substrate non-woven fabric used in the experiments below to prepare and ion-exchange non-woven fabric. The substrate non-woven fabric was prepared by thermal fusion of composite fibers consisting of a polypropylene core and a polyethylene sheath.

**TABLE 1**

| | |
|---|---|
| Core/sheath | Polypropylene/polyethylene |
| Areal density | 50 g/m² |
| Thickness | 0.55 mm |
| Fiber diameter | 15-40 µm |
| Process | Thermal fusion |
| Porosity | 91 % |

One sample of the non-woven fabric identification in Table 1 was irradiated with γ-rays in a nitrogen atmosphere and then immersed in a solution of glycidyl methacrylate (GMA) for reaction. Graft ratio of 163 % was obtained. Thereafter, the grafted non-woven fabric was immersed in a liquid mixture of sodium sulfite, isopropyl alcohol and water for sulfonation. Measurement of the ion-exchange capacity of the thus treated non-woven fabric showed that it was a strong acidic cation-exchange non-woven fabric having a salt splitting capacity of 2.82 meg/g.

Another sample of the same non-woven fabric was irradiated with γ-rays in a nitrogen atmosphere and thereafter immersed in a solution of chloromethylstyrene (CMS) for reaction and graft ratio of 148 % was obtained. The grafted non-woven fabric was then immersed in an aqueous solution of 10 % trimethylamine to introduce quaternary ammonium groups. The product was a strong basic anion-exchange non-woven fabric having a salt splitting capacity of 2.49 meg/g.

### Preparation of ion-conducting spacers

Table 2 shows the specifications of the diagonal net used as the substrate for preparing an ion-conducting spacer used in the experiments below.

**TABLE 2**

| | |
|---|---|
| Constituent material | Polyethylene |
| Shape | Diagonal net |
| Thickness | 0.8 mm |
| Mesh opening | 6 mm x 3 mm |

One sample of the diagonal net substrate identified in Table 2 was irradiated with γ-rays in a N₂ atmosphere and thereafter immersed in a liquid mixture of glycidyl methacrylate (GMA) and dimethylformamide (DMF) for reaction and graft ratio of 53 % was obtained. The grafted net was then immersed in a liquid mixture of sodium sulfite, isopropyl alcohol and water for sulfonation. The product was a strong acidic cation-conducting spacer having a salt splitting capacity of 0.62 meg/g.

Another sample of the diagonal net substrate identified in Table 2 was irradiated under the same conditions as just mentioned above and immersed, in a liquid mixture of vinylbenzyltrimethyl ammonium chloride (VBTAC), dimethyl acrylamide (DMAA) and water for reaction, and graft ratio of 36 % was obtained. The product was a strong basic anion-conducting spacer having a salt splitting capacity of 0.44 meg/g.

### Fabrication of EDI modules

The thus-prepared ion-exchange non-woven fabrics and ion-conducting spacers were mounted in the concentrating compartments of EDI modules (comprising four desalting compartments, three concentrating compartments, a cathode compartment and an anode compartment) of the type employed in Millipore's commercial ELIX^{®} by system.

The ion-exchange resin beads used therein are cation and anion exchange resin beads produced either by Rohm & Haas or Dow Chemical and sold under the respective trade names, AMBERLITE^{®} AND DOWEX^{®} (particle size = 590 ± 50 µm). The carbon beads used therein as the electrically conductive beads are produced by Rohm & Haas and sold under the trade name, AMBERSORB^{®} (particle size =590 ± 50 µm). Each deionization compartment measured 220 x 35 mm with a thickness of 3 mm and each concentration compartment was 0.8 mm thick. Each anode compartment and cathode compartment measured 2,5 mm thick.

The performances of the thus obtained electrodeionization modules (configurations A1 and A2 below) have been compared to conventional electrodeionization modules (configurations B1, B2 and C below). In configurations A1 and A2 (present invention), each of compartments was loaded as shown in Fig. 1 and explained above. Configurations B1 and B2 (conventional) were the same as A1 and A2, except that each concentrating compartment was filled with cation and anion exchange resin beads forming a mixed bed. Configuration C (conventional) was the same as A1 and A2, except that each desalting compartment was filled in the same manner as each concentrating compartment.

Using these apparatuses, a water pass test was conducted using supply water under the conditions as shown below. The flow volume of the feeding water was 3 l/h and the operating current was a 70 mA constant current. The fluid communication to each of the desalting compartments, on the one hand, and to each of the anode compartment, concentrating compartments and cathode compartment, on the other hand, are each provided as show in Fig. 1 in a serial arrangement.

The operating conditions of ultrapure water production apparatuses incorporating these electrodeionization modules are the following:

### Operating modes

### Characteristics of the supply water:

1) reverse osmosis (RO) water No. 1
   [CO2]=24 mg/l
   pH=5.5-5.7
   temperature = 20 to 22°C
   conductivity = 21.0 µs.cm
2) reverse osmosis (RO) water No. 2
   [CO₂]=32 mg/l
   pH=5.2
   temperature = 18°C
   conductivity =16.5 µs.cm
   [Ca²⁺]=2.0 to 3.0 mg/l as CaCO₃

### EDI operating modes:

. Operating mode 1: The EDI apparatuses have been subjected to continuous operation 24 hours a day, from the first day to the seventh day.
. Operating mode 2: The EDI apparatuses have been subjected to an operating mode consisting alternately of 2 hours of operation and two hours stopped (in standby), from the seventh day to the sixteenth day.
. Operating mode 3: The EDI apparatuses have been subjected to operation for the following times: 1:00-3:00; 5:00-7:00; 9:00-11:00 and 13:00-15:00. During the remaining period of time, the apparatuses were stopped (in standby) from the 16^{th} day to the 31^{st} day.
. Operating mode 4: the EDI apparatuses have been subjected to operation for the following times: 8:00-10:00 ; 14:00-16:00 ; and 20:00-22:00. During the remaining period of time, the apparatuses were stopped (in standby) from the 31^{st} day to the 57^{th} day.

The physical measurements carried out during these tests were measurements of voltage and current level (energy consumption and scale formation) and resistivity as a measure of the water quality produced by these EDI apparatuses.

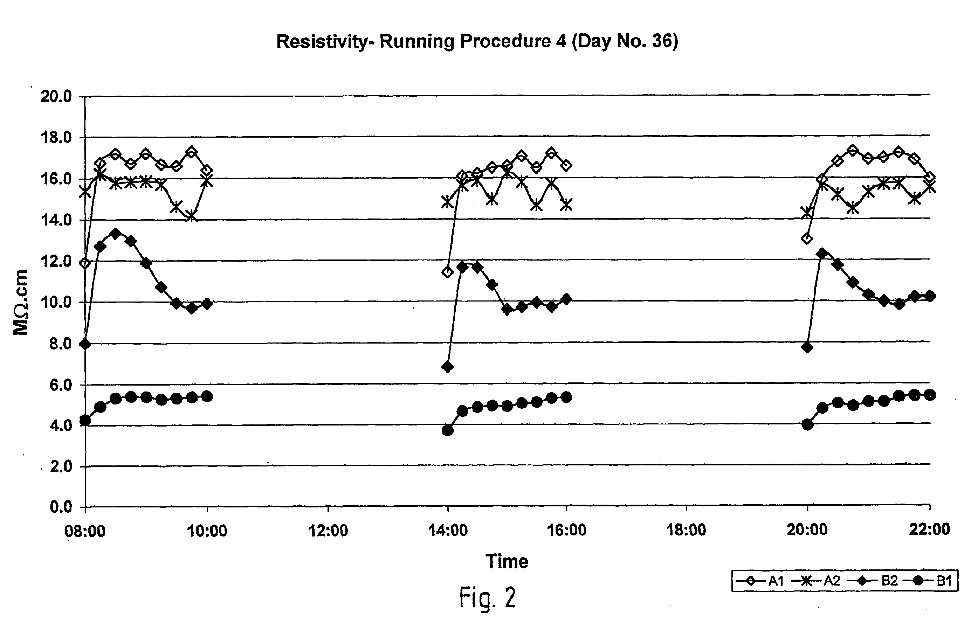

The measurement results are given in tables 1, 2 and 3 which follow and in the graph of Figure 2.

**Table 1: Comparison of the water qualities produced with the EDI apparatuses.**

| Day No. | A1^{a} | A2^{a} | B1^{a} | B2^{a,b} | C^{c} |
|---|---|---|---|---|---|
| | MΩ.cm | MΩ.cm | MΩ.cm | MΩ.cm | MΩ.cm |
| 2 | 14.7 | 13.3 | 12.73 | 10.82 | 9.8 |
| 3 | 14.3 | 14.3 | 12.1 | 10.28 | 9.9 |
| 4 | 16.36 | 15.08 | 11.7 | 10.74 | 10.8 |
| 7 | 15.7 | 15.8 | 12.6 | 11.9 | 6.43 |
| 10 | 15.0 | 14.82 | 9.6 | 12.5 | 5.48 |
| 11 | 15.7 | 15.96 | 10.1 | 11.4 | 6.0 |
| 16 | 16.2 | 15.82 | 10.8 | 11.7 | 6.0 |
| 17 | 15.9 | 15.7 | 9.6 | 11.7 | 6.0 |
| 18 | 16.0 | 15.9 | 10.2 | 11.7 | 6.0 |
| 21 | 16.0 | 15.7 | 10.9 | 11.7 | 6.3 |
| 22 | 15.6 | 14.5 | 10.8 | 11.7 | 7.6 |
| 25 | 16.3 | 15.5 | 10.8 | 11.49 | 9.37 |
| 26 | 17.7 | 16.2 | 9.3 | 12.0 | 8.77 |
| 27 | 17.9 | 16.0 | 9.4 | 11.5 | 8.77 |
| 28 | 17.8 | 15.6 | 7.3 | 9.9 | 11.82 |
| 30 | 17.6 | 15.4 | 6.7 | 10.3 | 11.82 |
| 31 | 17.0 | 16.0 | 7.34 | 9.8 | 9.7 |
| 33 | 17.0 | 15.7 | 5.8 | 10.5 | 9.7 |
| 34 | 17.0 | 15.7 | 5.8 | 10.4 | .9.7 |
| 35 | 17.2 | 15.9 | 5.63 | 11.9 | 9.7 |
| 36 | 17.36 | 14.97 | 5.11 | 10.92 | 9.7 |
| 37 | 17.23 | 15.2 | 4.94 | 10.8 | 9.32 |
| 38 | 17.2 | 15.9 | 5.38 | 11.9 | 9.32 |
| 39 | 17.7 | 15.8 | 4.33 | 11.44 | 9.32 |
| 40 | 16.6 | 15.97 | 4.67 | 10.91 | 9.32 |
| 41 | 16.9 | 15.5 | 4.67 | 11.2 | 9.32 |
| 42 | 16.82 | 14.4 | 4.67 | 10.5 | 9.32 |
| 50 | 15.2 | 14.3 | 4.54 | 9.84 | 11.2 |
| 52 | 16.6 | 14.6 | 4.73 | 9.52 | 11.2 |
| 53 | 16.3 | 14.92 | 4.77 | 10.56 | 11.2 |
| 54 | 15.42 | 14.71 | 4.54 | 10.19 | 11.2 |
| 55 | 16.6 | 15.21 | 4.53 | 10.05 | 11.2 |
| 56 | 16.6 | 15.21 | 4.53 | 10.05 | 10.93 |
| 57 | 16.46 | 15.28 | 6.46 | 11.89 | 10.65 |
| Mean | 16.42 | 15.32 | 7.56 | 11.00 | 9.20 |
| (S.D) | (0.94) | (0.66) | (2.90) | (0.79) | (1.89) |

| | | | | | |
|---|---|---|---|---|---|
| a : - EDI apparatuses using RO water No. 2 b : - Apparatus B2 using RO water No. 1 between days 1 and 21 c : - Apparatus C using only RO water No. 1 | | | | | |

**Table 2: Comparison of energy consumption of the EDI apparatuses.**

| Day No. | A1^{a} | A2^{a} | B1^{a} | B2^{a,b} | C^{c} |
|---|---|---|---|---|---|
| | (Wl⁻¹h⁻¹) | (Wl⁻¹h⁻¹) | (Wl⁻¹h⁻¹) | (Wl⁻¹h⁻¹) | (Wl⁻¹h⁻¹) |
| 2 | 0.247 | 0.272 | 0.209 | 0.237 | 0.832 |
| 3 | 0.257 | 0.272 | 0217 | 0.241 | 0.823 |
| 4 | 0.276 | 0.272 | 0.215 | 0.234 | 0.820 |
| 7 | 0.264 | 0.275 | 0.240 | 0.241 | 0.457 |
| 10 | 0.276 | 0.282 | 0.236 | 0.227 | 0.467 |
| 14 | 0.274 | 0.293 | 0.248 | 0.224 | 0.465 |
| 16 | 0.283 | 0.297 | 0.252 | 0.219 | 0.465 |
| 17 | 0.285 | 0.316 | 0.248 | 0.219 | 0.465 |
| 18 | 0.288 | 0.303 | 0.255 | 0.219 | 0.465 |
| 21 | 0.284 | 0.327 | 0.255 | 0.224 | 0.466 |
| 22 | 0.292 | 0.330 | 0.253 | 0.219 | 0.467 |
| 25 | 0.290 | 0.331 | 0.261 | 0.246 | 0.406 |
| 28 | 0.294 | 0.309 | 0.267 | 0.234 | 0.760 |
| 31 | 0.295 | 0.307 | 0.268 | 0.234 | 0.816 |
| 42 | 0.306 | 0.318 | 0.279 | 0.247 | 0.821 |
| 50 | 0.306 | 0.323 | 0.280 | 0.253 | 0.901 |
| 52 | 0.305 | 0.333 | 0.284 | 0.256 | 0.901 |
| 56 | 0.305 | 0.333 | 0.284 | 0.256 | 0.887 |
| 57 | 0.305 | 0.333 | 0.284 | 0.256 | 0.872 |

| | | | | | |
|---|---|---|---|---|---|
| a : - EDI apparatuses using RO water No. 2 b : - Apparatus B2 using RO water No. 1 between days 1 and 21 c : - Apparatus C using only RO water No. 1 | | | | | |

**Table 3: Observed electrical impedance/resistance in ohms (Q) profile of the preferred embodiments A1 and A2 with time**

| Day No. | A1^{a} | A2^{a} |
|---|---|---|
| | Ohms (Ω) | Ohms (Ω) |
| 2 | 155 | 162 |
| 30 | 176 | 181 |
| 51 | 183 | 196 |
| 84 | 190 | 203 |
| 106 | 203 | 222 |
| 146 | 205 | 235 |
| 196 | 220 | 234 |
| 244 | 218 | 258 |

| | | |
|---|---|---|
| a : - EDI apparatuses using RO water No. 2 | | |

The electrical impedance (ohms) of a given EDI module is calculated from the applied operating current and the resulting voltage. It is normal to observe a steady increase in the impedance of a given EDI module with time. Whenever there is significant scale formation on the membranes (usually the anion) of a given EDI module, then this will be indicated by a rapid increase in the observed impedance (i.e. 50 % increase in 2 or 3 days), as a result of scale precipitation on the membrane interrupting the flow of electrical charge or current through the EDI module. The data presented in the above table strongly indicates that there is no or negligible scale precipitation on the surface of the membranes of these EDI modules.

It will be understood that the association of two different ion-exchange configurations respectively in the desalting and concentrating compartments of the electrodeionization modules, according to the present invention, provides the following advantages:
1) the production of ultrapure water, of a higher level of purity than that of known apparatuses, in a reliable manner over a longer period of time than with these known apparatuses in continuous operation or in cyclic operation (certain periods of operation and certain periods stopped) representing a much more realistic implementation in water purification installations existing in the world. The synergetic effect resulting from the association dealt with above will be particularly appreciated (c.f. table 1 and Figure 2).
2) the EDI apparatus comprising the electrodeionization module 10 can operate with supply water with greater quantities of carbon dioxide and of calcium ions than with known apparatuses without any adverse effect on the quality of purified water produced and without any effect on scale formation when calcium ions are present in the supply load at moderate concentrations (in practice less than 30 mg of Ca²⁺ per liter).
3) the compression of fibers in the concentrating compartments of the electrodeionization module 10 restricts the internal movement of the ion-exchange resin beads in mixed bed configuration in the desalting compartments, which enables the EDI apparatus with this to function at high operational pressures and flow rates of the supply load.
4) improved transport of the ions in the concentrating compartments due to the combined presence of the separate layers of ion-exchange materials in the concentrating compartments and of the ion-exchange resin beads in mixed bed configuration in the desalting compartments.
5) the energy consumption is low and stable.

Naturally, the present invention is not limited to the form of the embodiment described and represented, but covers any variant form.

## Claims

1. Electrodeionization (EDI) module comprising at least one ion-exchange membrane delimiting at least one desalting zone (11) and at least one concentrating zone (12) situated between electrodes (13, 14), each zone being provided with ion-exchange means, **characterized in that** the ion-exchange means present in a zone are comprised of either ion-exchange resin beads (17) or at least one non-woven or woven fabric (21, 22) made of ion-exchange fibers, the resin beads and the fabric(s) being both present in the EDI module.

2. EDI module according to claim 1 a) wherein each zone is formed by a compartment and the module contain either (i) at least one desalting compartment separated from two adjacent concentrating compartments respectively by an anion selective ion-exchange membrane and a cation selective ion-exchange membrane, or
(ii) at least one concentrating compartment separated from two adjacent desalting compartments respectively by an anion selective ion-exchange membrane and a cation selective ion-exchange membrane, or
b) containing alternating desalting compartments and concentrating compartments between electrodes, wherein each desalting compartment (11) is adjacent to two concentrating compartments and separated therefrom respectively by an anion selective ion-exchange membrane (15) and a cation selective ion-exchange membrane (16), each compartment being provided with ion-exchange means, wherein (i) the ion-exchange means present in the desalting compartments are comprised of ion-exchange resin beads (17) while the ion-exchange means present in the concentrating compartments are comprised of at least one non-woven or woven fabric (21, 22) made of ion-exchange fibers, or
(ii) the ion-exchange means present in the concentrating compartments are comprised of ion-exchange resin beads while the ion-exchange means present in the desalting compartments are comprised of at least one non-woven or woven fabric made of ion-exchange fibers.

3. EDI module according to claims 1 or 2, wherein the ion-exchange means comprised of at least one woven or non-woven fabric made of ion-exchange fibers form at least one assembly comprising a woven or non-woven fabric (21) made of anion-exchange fibers and a woven or non-woven fabric (22) made of cation-exchange fibers which are placed in a face to face relationship, and at least one ion conducting spacer (23, 24) which is able to perform ion-exchanges and is interposed between the anion and cation-exchange fibers, and optionally
a) the or each assembly is arranged such that the woven or non-woven fabric which is at the anion selective ion-echange membrane end is a woven or non-woven fabric made of anion-exchange fibers and the woven or non-woven fabric which is at the cation selective ion-exchange membrane end is a woven or non-woven fabric made of cation-exchange fibers, and/or
b) an anion conducting spacer and a cation conducting spacer which are able to perform ion-exchanges are positioned between the anion and cation-exchange fabrics and are respectively situated next to the anion-exchange fabric and the cation-exchange fabric, and/or
c) the or each spacer is in the form of net-like spacer, preferably a diagonal net-like spacer.

4. EDI module according to claim 3, wherein the fabrics and the spacer(s) of an assembly are in intimate contact with each other and are, preferably, carried by a frame.

5. EDI module according to any of the claims 1 to 4, wherein the or each woven or non-woven fabric made of ion-exchange fibers comprises a substrate made of fibers into which ion-exchange functional groups have been introduced by grafting with monomers which have ion-exchange groups or grafting with monomers having a group which may be converted to ion-exchange group and then converting said group to the ion-exchange group, and the or each spacer, when present, comprises a substrate made of fibers or resins into which ion-exchange functional groups have been introduced by grafting with monomers which have ion-exchange groups or grafting with monomers having a group which may be converted to ion-exchange group and then converting said group to the ion-exchange group, and optionally
a) the substrate is a cellulosic or polyolefinic material, and/or
b) the functional groups are introduced by grafting polymerization initiated by radiation or a chemical reagent, such as
wherein the radiation source is ionizing radiation, such as UV-rays, X-rays, γ-rays, accelerated electrons, β-rays or α-rays, or
wherein the chemical reagent comprises cerium ions.

6. EDI module according to anyone of claims 3 to 5, wherein the cation-exchange fibers and/or cation-conducting spacer(s) have sulfonic acid groups and the anion exchange fibers and/or anion-conducting spacer(s) have quaternary ammonium groups.

7. EDI module according to anyone of claims 1 to 3, wherein the or each woven or non-woven fabric made of ion-exchange fibers comprises a substrate made of heterogeneous fibers comprised of a mixture of ion-exchange material and polyolefinic binder and the or each spacer, when present, comprises a substrate made of resins or heterogeneous fibers comprised of a mixture of ion-exchange material and polyolefinic binder.

8. EDI module according to anyone of claims 1 to 7, wherein the ion-exchange resin beads are formed by anion-exchangers and cation-exchangers forming a mixed bed or separate beds, preferably a mixed bed,
and optionally wherein the ion-exchange resin beads are formed from polymers, such as polystyrene or styrenedivinylbenzene copolymers, having functional groups, preferably sulfonic acid groups for the cation-exchangers and quaternary ammonium groups for the anion-exchangers.

9. EDI module according to anyone of claims 2 to 8, wherein an electrode compartment is formed between each electrode and the ion-exchange membrane adjacent to the electrode, and optionally
a) the cathode compartment contains electrically conductive particles, which are preferably carbon and/or metallic particles, or
b) the cathode compartment comprises at least one spacer in the form of a net-like spacer maintaining the flow between the cathode and the adjacent cation selective membrane, especially
wherein the or each spacer in the cathode compartment has ion-exchange groups, and/or
c) wherein the anode compartment comprises at least one spacer in the form of a net-like spacer maintaining the flow between the anode and the adjacent anion selective membrane, especially
wherein the or each spacer in the anode compartment has ion-exchange groups, and/or
d) wherein the concentrating or desalting compartment adjacent to each electrode forms the electrode compartment.

10. EDI module according to anyone of claims 2 to 9, which comprises a plurality of alternating desalting compartments and concentrating compartments and wherein fluid communication to each of the desalting compartments and to each of the concentrating compartments are each provided in a serial or parallel arrangement.

11. EDI apparatus for water production of high purity or for production of ultra-pure water, comprising an EDI module as defined in any one of the preceding claims.

## Patentansprüche

1. Elektrodeionisations-(EDI)-Modul umfassend wenigstens eine Ionen-Austauschmembran, die wenigstens eine Entsalzungszone (11) und eine zwischen Elektroden (13, 14) angeordnete Konzentrationszone (12) begrenzt, wobei jede Zone mit Ionen-Austauschmitteln versehen ist, **dadurch gekennzeichnet, dass** die in einer Zone vorhandenen Ionen-Austauschmittel entweder Ionen-Austausch-Harzperlen (17) oder wenigstens einen aus Ionen-Austauschfasern hergestellten nicht gewebten oder gewebtem Stoff- Vlies- oder Gewebestoff (21, 22) - umfassen, wobei die Harzperlen und der bzw. die Stoffe beide in dem EDI-Modul vorhanden sind.

2. EDI-Modul nach Anspruch 1,
a) wobei jede Zone vom einem Abteil gebildet wird und das Modul entweder enthält:
(i) wenigstens ein Entsalzungsabteil, getrennt von zwei angrenzenden Konzentrationsabteilen durch eine anionenselektive Ionen-Austauschmembran bzw. eine kationenselektive Ionen-Austauschmembrane, oder
(ii) wenigstens ein Konzentrationsabteil, getrennt von zwei angrenzenden Entsalzungsabteilen durch einen anionenselektive Ionen-Austauschmembrane bzw. eine kationenselektive Ionen-Austauschmembrane, oder
b) abwechselnde Entsalzungsabteile und Konzentrationsabteile zwischen Elektroden enthält, wobei jedes Entsalzungsabteil (11) an zwei Konzentrationsabteile angrenzt und davon durch eine anionenselektive Ionen-Austauschmembrane (15) bzw. eine kationenselektive Ionen-Austauschmembrane getrennt ist, wobei jedes Abteil mit Ionen-Austauschmitteln versehen ist, wobei
(i) die in den Entsalzungsabteilen vorhandenen Ionen-Austauschmittel Ionen-Austausch-Harzperlen (17) umfassen, während die in den Konzentrationsabteilen vorhandenen Ionen-Austauschmittel wenigstens ein aus Ionen-Austauschfasern hergestellten Vlies- oder Gewebestoff (21, 22) umfassen, oder
(ii) die in den Konzentrationsabteilen vorhandenen Ionen-Austauschmittel Ionen-Austauschharze umfassen, während die in den Entsalzungsabteilungen vorhandenen Ionen-Austauschmittel wenigstens einen aus Ionen-Austauschfasern hergestellten Vlies- oder Gewebestoff (21, 22) umfassen.

3. EDI-Modul nach Anspruch 1 oder 2, wobei die wenigstens einen aus Ionen-Austauschfasern hergestellten Vlies- oder Gewebestoff umfassen Ionen-Austauschmittel wenigstens eine Anordnung ausbilden, die einen aus Anionen-Austauschfasern hergestellten Web- oder Vlies-Stoff (21) und einen aus Kationen-Austauschfasern hergestellten Web- oder Vliesstoff (22), welche in einander gegenüberliegender Beziehung platziert sind, und wenigstens einem ionenleitenden Abstandshalter (23, 24) aufweist, welcher in der Lage ist, Ionen-Austausche durchzuführen und zwischen den Anionen- und Kationen-Austauschfasern angeordnet ist, und optional
a) die oder jede Anordnung derart angeordnet ist, dass der Web- oder Vliesstoff, welcher sich an dem anionenselektiven Ionen-Austauschmembranende befindet, ein aus Anionen-Austauschfasern hergestellter Web- oder Vliesstoff ist, und der Web- oder Vliesstoff, welcher sich an dem kationenselektiven Ionen-Austauschmembranende befindet, ein aus Kationen-Austauschfasern hergestellter Web- oder ein Vliesstoff ist; und/oder
b) ein Anionen leitender Abstandshalter und ein Kationen leitender Abstandshalter, welche in der Lage sind, Ionen-Austausche durchzuführen, zwischen den Anionen- und Kationen-Austauschstoffen positioniert sind und sich jeweils unmittelbar an dem Anionen-Austauschsstoff und an dem Kationen-Austauschstoff befinden, und/oder
c) der oder jeder Abstandshalter in der Form eines netzförmigen Abstandshalters, Vorzugsweise eines diagonal netzförmigen Abstandshalters vorliegt.

4. EDI-Modul nach Anspruch 3, wobei die Stoffe und der bzw. die Abstandshalter einer Anordnung in engem Kontakt miteinander stehen und bevorzugt von einem Rahmen getragen werden.

5. EDI-Modul nach einem der Ansprüche 1 bis 4, wobei der oder jeder aus Ionen-Austauschfasern hergestellte Web- oder Vliesstoff, ein aus Fasern hergestelltes Substrat umfaßt, in welche Ionen-Austauschfunktionalgruppen durch Pfropfen mit Monomeren, welche Ionen-Austauschgruppen besitzen, oder Pfropfen mit Monomeren mit einer Gruppe, welche in eine Ionen-Austauschgruppe umgewandelt werden kann, und dann die Gruppe in die Ionen-Austauschgruppe umgewandelt wird, eingefügt worden sind, und der oder jeder Abstandshalter, falls vorhanden, ein aus Fasern oder Harzen hergestelltes Substrat umfaßt, in welche Ionen-Austauschfunktionalgruppen durch Pfropfen mit Monomeren, welche Ionen-Austauschgruppen besitzen, oder Pfropfen mit Monomeren mit einer Gruppe, welche in eine Ionen-Austauschgruppe umgewandelt werden kann, und dann die Gruppe in die Ionen-Austauschgruppe umgewandelt wird, eingefügt worden sind, und optional
a) das Substrat Zellulose- oder Polyolefin-Material ist, und/oder
b) die funktionalen Gruppen durch eine durch Strahlung oder ein chemisches Reagens initiierte Propfpolymerisation eingefügt werden,
wobei die Strahlungsquelle ionisierende Strahlung, wie z.B. UV-Strahlen, Röntgen-Strahlen, γ-Strahlen, beschleunigte Elektronen, β-Strahlen oder α-Strahlen ist, oder
wobei das chemische Reagenz Zerionen umfaßt.

6. EDI-Modul nach einem der Ansprüche 3 bis 5, wobei die Kationen-Austauschfasern und/oder der bzw. die Kationen leitenden Abstandshalter Sulfonsäuregruppen haben, und die Anionen-Austauschfasern und/oder der bzw. die Anionen leitenden Abstandshalter quaternäre Ammoniumgruppen haben.

7. EDI-Modul nach einem der Ansprüche 1 bis 3, wobei der oder jeder aus Ionen-Austauschfasern hergestellte Web- oder Vliesstoff, ein aus heterogenen Fasern hergestelltes Substrat umfaßt, die einem Gemisch von Ionen-Austauschmaterial und Polyolefinbinder umfassen, und der oder jeder Abstandshalter, wenn vorhanden, ein aus Harzen oder heterogenen Fasern hergestelltes Substrat umfaßt, die ein Gemisch von Ionen-Austauschmaterial und einen Polyolefinbinder umfaßen.

8. EDI-Modul nach einem der Ansprüche 1 bis 7, wobei die Ionen-Austausch-Harzperlen von Anionen-Austauschern und Kationen-Austauschern gebildet werden, die ein Mischbett oder getrennte Betten, bevorzugt ein Mischbett bilden, und wobei optional die Ionen-Austausch-Harzperlen aus Polymeren wie zum Beispiel Polystyrol oder Styroldivinylbenzolkopolymeren mit funktionalen Gruppen, bevorzugt Sulfonsäuregruppen für die Kationen-Austauscher und quaternären Ammoniumgruppen für die Anionen-Austauscher, ausgebildet sind.

9. EDI-Modul nach einem der Ansprüche 2 bis 8, wobei ein Elektrodenabteil zwischen jeder Elektrode und der Ionen-Austauschmembrane angrenzend an die Elektrode ausgebildet ist, und optional
a) das Kathodenabteil elektrisch leitende Partikel enthält, welche bevorzugt Kohlenstoff- und/oder metallische Partikel sind, oder
b) das Kathodenabteil wenigstens einen Abstandshalter in der Form eines netzförmigen Abstandshalter umfaßt, welcher den Fluss zwischen der Kathode und den angrenzenden kationenselektiven Membranen aufrecht erhält, wobei insbesondere der oder jeder Abstandshalter in dem Kathodenabteil Ionen-Austauschgruppen besitzt, und/oder
c) wobei das Anodenabteil wenigstens einen Abstandshalter in der Form eines netzförmigen Abstandshalters umfaßt, der den Fluss zwischen der Anode und der angrenzenden anionenselektiven Membrane aufrecht erhält, wobei insbesondere der oder jeder Abstandshalter in dem Anodenabteil Ionen-Austauschgruppen besitzt, und/oder
d) wobei das an jede Elektrode angrenzende Konzentrations- oder Entsalzungsabteil das Elektrodenabteil ausbildet.

10. EDI-Modul nach einem der Ansprüche 2 bis 9, welches eine Mehrzahl alternierender Entsalzungsabteile und Konzentrationsabteile umfaßt, und wobei eine Fluidverbindung zu jedem der Entsalzungsabteile und zu jedem der Konzentrationsabteile jeweils in einer seriellen oder parallelen Anordnung vorgesehen ist.

11. EDI-Vorrichtung zur Erzeugung von Wasser von hoher Reinheit und zur Erzeugung von ultrareinem Wasser, welche ein EDI-Modul gemäß einem der vorstehenden Ansprüche umfaßt.

## Revendications

1. Module d'électrodéionisation (EDI) comprenant au moins une membrane échangeuse d'ions délimitant au moins une zone de dessalement (11) et au moins une zone de concentration (12) situées entre des électrodes (13, 14), chaque zone étant équipée d'un moyen d'échange d'ions, **caractérisé en ce que** le moyen d'échange d'ions présent dans une zone comprend soit des grains de résine échangeuse d'ions (17) soit au moins une étoffe non-tissée ou tissée (21, 22) faite de fibres échangeuses d'ions, les grains de résine et le ou les étoffes étant tous deux présents dans le module EDI.

2. Module EDI selon la revendication 1,
a) dans lequel chaque zone est formée d'un compartiment et le module contient soit
i) au moins un compartiment de dessalement séparé de deux compartiments de concentration adjacents par respectivement une membrane échangeuse d'ions sélective en anions et une membrane échangeuse d'ions sélective en cations, ou
ii) au moins un compartiment de concentration séparé de deux compartiments de dessalement adjacents par respectivement une membrane échangeuse d'ions sélective en anions et une membrane échangeuse d'ions sélective en cations, soit
b) des compartiments de dessalement et des compartiments de concentration entre des électrodes, dans lequel chaque compartiment de dessalement (11) est adjacent à deux compartiments de concentration et séparé de ceux-ci respectivement par une membrane échangeuse d'ions sélective en anions (15) et une membrane échangeuse d'ions sélective en cations (16), chaque compartiment étant équipé d'un moyen d'échange d'ions, dans lequel
i) le moyen d'échange d'ions présent dans les compartiments de dessalement comprend des grains de résine échangeuse d'ions (17) alors que le moyen d'échange d'ions présent dans les compartiments de concentration comprend au moins une étoffe non-tissée ou tissée (21, 22) faite de fibres échangeuses d'ions, ou
ii) le moyen d'échange d'ions dans les compartiments de concentration comprend des grains de résine échangeuse d'ions alors que le moyen d'échange d'ions présent dans les compartiments de dessalement comprend au moins une étoffe non-tissée ou tissée faite de fibres échangeuses d'ions.

3. Module EDI selon la revendication 1 ou 2, dans lequel le moyen d'échange d'ions constitué d'au moins une étoffe non-tissée ou tissée faite de fibres échangeuses d'ions forme au moins un assemblage constitué d'une étoffe non-tissée ou tissée (21) faite de fibres échangeuses d'anions et une étoffe non-tissée ou tissée (22) faite de fibres échangeuses de cations lesquelles sont disposées face à face, et au moins un espaceur conducteur d'ions (23, 24), lequel peut réaliser des échanges d'ions, est interposé entre les fibres échangeuses d'anions et de cations, et de manière facultative:
a) le ou chaque assemblage est conçu de manière à ce que l'étoffe non-tissée ou tissée qui est à l'extrémité de la membrane échangeuse d'ions sélective en anions est une étoffe non-tissée ou tissée faite de fibres échangeuses d'anions et l'étoffe non-tissée ou tissée qui est à l'extrémité de la membrane échangeuse d'ions sélective en cations est une étoffe non-tissée ou tissée faite de fibres échangeuses de cations, et/ou
b) un espaceur conducteur d'anions et un espaceur conducteur de cations capables d'échanger des ions sont positionnés entre les étoffes échangeuses d'anions et de cations et sont respectivement situés à côté de l'étoffe échangeuse d'anions et de l'étoffe échangeuse de cations, et/ou
c) le ou chaque espaceur a la forme d'un espaceur similaire à un filet, de préférence un espaceur similaire à un filet diagonal.

4. Module EDI selon la revendication 3, dans lequel les étoffes et le ou les espaceurs d'un assemblage sont en contact intime l'un avec l'autre et sont, de préférence, supportés par un cadre.

5. Module EDI selon l'une quelconque des revendications 1 à 4, dans lequel la ou chaque étoffe tissée ou non-tissée faite de fibres échangeuses d'ions comprend un substrat fait de fibres dans lesquelles des groupes fonctionnels échangeurs d'ions ont été introduits par greffage de monomères portant des groupes échangeurs d'ions ou greffage de monomères portant un groupe pouvant être converti en groupe échangeur d'ions puis conversion dudit groupe en groupe échangeur d'ions, et le ou chaque espaceur, s'il est présent, comprend un substrat fait de fibres ou de résine dans lesquelles des groupes fonctionnels échangeurs d'ions ont été introduits par greffage de monomères lesquels portent des groupes échangeurs d'ions ou greffage de monomères portant un groupe pouvant être converti en groupe échangeur d'ions puis conversion dudit groupe en groupe échangeur d'ions, et de manière facultative
a) le substrat est un matériau cellulosique ou poly-oléfinique, et/ou
b) les groupes fonctionnels sont introduits par polymérisation par greffage initiée par radiation ou par un réactif chimique, dans lequel
la source de radiation est une radiation ionisante, telle que des rayons UV, des rayons X, des rayons γ, des électrons accélérés, des rayons β ou des rayons α,
ou dans lequel le réactif chimique comprend des ions cériums.

6. Module EDI selon l'une quelconque des revendications 3 à 5, dans lequel les fibres échangeuses de cations et/ou le ou les espaceurs conducteurs de cations portent des groupes acides sulfoniques et les fibres échangeuses d'anions et/ou le ou les espaceurs conducteurs d'anions portent des groupes ammoniums quaternaires.

7. Module EDI selon l'une quelconque des revendications 1 à 3 dans lequel la ou chaque étoffe tissée ou non-tissée faite de fibres échangeuses d'ions comprend un substrat fait de fibres hétérogènes constituées d'un mélange de matériau échangeur d'ions et d'un liant poly-oléfinique et le ou chaque espaceur, s'il est présent, comprend un substrat fait de résines ou de fibres hétérogènes constituées d'un mélange de matériau échangeur d'ions et d'un liant poly-oléfinique.

8. Module EDI selon l'une quelconque des revendications 1 à 7, dans lequel les grains de résine échangeuse d'ions sont formés d'échangeurs d'anions et d'échangeurs de cations formant un lit mélangé ou des lits séparés, de préférence un lit mélangé,
et de manière facultative, dans lequel les grains de résine échangeuse d'ions sont formés de polymères, tels que du polystyrène ou des copolymères styrène-divinylbenzène, munis de groupes fonctionnels, de préférence des groupes acides sulfoniques pour les échangeurs de cations et des groupes ammoniums pour les échangeurs d'anions.

9. Module EDI selon l'une quelconque des revendications 2 à 8, dans lequel un compartiment d'électrode est formé entre chaque électrode et la membrane échangeuse d'ions adjacente à l'électrode, et de manière facultative
a) le compartiment de cathode contient des particules conductrices d'électricité, lesquelles sont de préférence des particules de carbone et/ou métalliques, ou
b) le compartiment de cathode comprend au moins un espaceur dont la forme est similaire à un filet maintenant le flux entre la cathode et la membrane sélective des cations adjacente, en particulier
dans lequel le ou chaque espaceur dans le compartiment de cathode porte des groupes échangeurs d'ions, et/ou
c) dans lequel le compartiment d'anode comprend au moins un espaceur dont la forme est similaire à un filet maintenant le flux entre l'anode et la membrane sélective des anions adjacente, en particulier dans lequel le ou chaque espaceur dans le compartiment anode porte des groupes échangeurs d'ions, et/ou
d) dans lequel le compartiment de concentration ou de dessalement adjacent à chaque électrode forme le compartiment électrode.

10. Module EDI selon l'une quelconque des revendications 2 à 9, comprenant une pluralité de compartiments de dessalement et de compartiments de concentration alternés et dans lequel la communication de fluide entre chacun des compartiments de dessalement et chacun des compartiments de concentration sont chacun organisés en série ou en parallèle.

11. Appareil EDI pour la production d'eau de haute pureté ou pour la production d'eau ultra-pure, comprenant un module EDI tel que défini dans l'une quelconque des revendications précédentes.
